Europäisches Patentamt

(19) European Patent Office

Office européen des brevets

(11) Numéro de publication: **0 006 380**
**B1**

(12) **FASCICULE DE BREVET EUROPEEN**

(45) Date de publication du fascicule de brevet: **17.02.82**

(51) Int. Cl.³: **A 23 L 1/23, A 23 C 19/02**

(21) Numéro de dépôt: **79400371.5**

(22) Date de dépôt: **07.06.79**

(54) Procédé de préparation de concentrés protéiques réengraissés, à arome fromager et leurs utilisations, notamment pour la fabrication de fromages fondus.

(30) Priorité: **08.06.78 FR 7817177**

(43) Date de publication de la demande:
**09.01.80 Bulletin 80/1**

(45) Mention de la délivrance du brevet:
**17.02.82 Bulletin 82/7**

(84) Etats Contractants Désignés:
**BE DE GB IT LU NL**

(56) Documents cités:
**GB - A - 1 361 817**
**US - A - 3 100 153**
**US - A - 3 689 286**
**US - A - 3 840 672**

(73) Titulaire: **FROMAGERIES BEL**
**4, rue d'Anjou**
**F-75008 Paris (FR)**

(72) Inventeur: **Chardenon, Martine**
**Résidence du Parc 12, faubourg Chartrain**
**F-41100 Vendôme (FR)**
Inventeur: **Delespaul, Gilbert**
**10, rue d'Anjou**
**F-41100 Vendôme (FR)**
Inventeur: **Chambon, Michel**
**7, allée du Maine**
**F-41100 Vendôme (FR)**

(74) Mandataire: **Fruchard, Guy et al,**
**NOVAPAT-CABINET CHEREAU 107, boulevard Péreire**
**F-75017 Paris (FR)**

Courier Press, Leamington Spa, England.

Procédé de preparation de concentrés protéiques réengraissés, à arôme fromager, et leurs utilisations, notamment pour la fabrication de fromages fondus

La présente invention se rapporte au domaine général de l'industrie alimentaire et, plus particulièrement, à un procédé pour préparer des concentrés protéiques à arôme de fromage, ces concentrés pouvant être incorporés dans des aliments pour leur conférer ces arômes de fromagers, spécialement des arômes de fromage type pâte pressée cuite ou pâte persillée. La présente invention se rapporte également à l'utilisation des nouveaux produits obtenus par le procédé indiqué ci-dessus.

Il est bien connu que des fromages du type pâte pressée cuite ou pâte persillée sont très appréciés des consommateurs en raison de leurs arômes. De ce fait, ces fromages sont employés non seulement pour leur consommation directe, mais aussi pour des applications industrielles (telles que le fromage fondu) ou culinaires lorsqu'on souhaite conférer à des plats cuisinés, à des produits alimentaires déjà préparés, à des sauces de salade, etc ... les arômes spécifiques de ces fromages.

Cependant, l'obtention de tels fromages pose des problèmes car leur fabrication est longue et demande notamment une maturation prolongée due aux réactions enzymatiques et fermentaires (nécessaires à la production de l'arôme) qui se produisent progressivement au cours de l'affinage. Il en résulte que le prix de revient de ces fromages est élevé par suite de la nécessité de l'emmagasinage prolongé de ces fromages, entraînant un temps important d'immobilisation des produits et des locaux d'affinage.

Il serait donc intéressant de pouvoir préparer directement des arômes concentrés de fromage qu'on pourrait utiliser dans toutes les applications précédentes, permettant d'obtenir avec un moindre prix de revient des résultats analogues à ceux fournis par l'emploi des fromages proprement dits.

Des arômes fromagers du Cheddar ont déjà été mis au point par Kristoffersen et les travaux de ce chercheur ont fait l'objet de nombreuses publications. On connaît aussi des travaux ayant eu pour but la mise au point d'arômes synthétiques de fromage, notamment décrits dans les documents suivants:

— Le brevet américain n° 3.446.627 se rapporte à la production d'un arôme de Cheddar (ou d'autres fromages tels que le fromage suisse, le fromage de Neufchâtel ou le parmesan) par fermentation à l'aide de microorganismes (Streptococcus) ensemencés sur un système de protéines-hydrates de carbone avec ou sans graisse, par exemple du lait entier ou du lait écrémé;

— le brevet américain n° 3.720.520 se rapporte à la production d'un arôme de fromage Bleu (pâte persillée) obtenu en faisant croître du Penicillum roqueforti dans un milieu aqueux de caséinate de sodium et de graisse (beurre);

— le brevet américain n° 3.072.488 se rapporte à la production d'un arôme de pâte persillée, utilisé pour l'aromatisation de produits alimentaires, en inoculant un milieu stérile (lait entier, lait écrémé, petit lait) additionné d'un produit formé de NaCl ou de lactose, à l'aide de spores de P. roqueforti.

D'autres chercheurs se sont efforcés de trouver des arômes renforcés par addition de composés chimiques caractéristiques des arômes recherchés. Ce type de procédé est présenté notamment dans la demande de brevet français publiée n° 2.207.655 qui décrit un procédé pour conférer un arôme de fromage d'Italie à un aliment en y ajoutant du 2-phényléthanol et du méthyl-1-butanol. De même, dans la demande de brevet français publiée n° 2.212.103, on décrit une composition aromatisante pour conférer à des produits alimentaires un arôme de fromage du type camembert ou bleu, cette composition étant à base d'heptanone-2, de nonanone-2, d'heptanol-2 et/ou de nonanol-2, de phénol, d'acide butyrique, d'octène-1 ol-3 et de cinnamate de méthyle. Dans la demande de brevet français publiée n° 2.237.588, on décrit un procédé pour conférer un arôme de fromage de Fontina à un aliment, en ajoutant à l'aliment une composition comprenant de l'acide $\beta$-phénylpropionique et des acides alcanoïques monométhylés en position non terminale, ayant 4 à 6 atomes de carbone. On peut également citer la demande de brevet français publiée n° 2.247.986 qui décrit une composition aromatisante pour conférer à des matières alimentaires un arôme du type fromage de chèvre.

Tous ces procédés présentent trois types d'inconvénients:

— tout d'abord, comme on ne connaît pas exactement tous les composants des arômes fromagers, il est très difficile de les reconstituer exactement par synthèse;

— ensuite, il est difficile de reconstituer l'arôme spécifique d'un fromage car cet arôme est souvent dû également à un effet synergique des divers constituants entre eux, effet qu'on n'obtient pas facilement par synthèse;

— enfin, on a constaté que, sur divers substrats tels que le lait entier, le lait écrémé, la caséine et le lait emprésuré, la voie fermentaire conduit à de mauvais résultats pour la reconstitution des arômes fromagers, car elle est difficile à conduire et sensible à la contamination extérieure.

On peut également citer les brevets américains n° 3.689.286 et n° 3.840.672 présentant des compositions à odeur de fromage, obtenues par emprésurage.

Un but que se propose l'invention est donc de prévoir un procédé pour préparer des arômes fromagers pour l'incorporation dans des aliments, ce procédé ne présentant pas les problèmes précédemment indiqués, dus aux difficultés de conduire la réaction et à la sensibilité aux problèmes de contamination extérieure.

Un autre but que se propose l'invention est de choisir des milieux de fermentation ayant une composition voisine de celle du fromage, étant à l'état fluide et de consistance homogène, en permettant une conduite rationnelle des processus de fermentation "artificiels."

Un autre but que se propose l'invention est d'obtenir une grande régularité dans la production des arômes.

D'autres buts apparaîtront d'après la description suivante.

Ces buts sont maintenant atteints par un procédé de préparation de concentrés protéiques réengraissés, à arôme fromager par réglage de la teneur en extrait sec, standardisation en matière grasse, stérilisation et fermentation aromatisante, par action enzymatique ou ensemencement par des ferments générateurs d'arômes fromagers, caractérisé en ce que le réglgage de la teneur en extrait sec des concentrés est réalisé par ulfiltration, dialyse ou chromatographie préparative, et en ce qu'avant la stérilisation, les concentrés protéiques sont soumis à une homogénéisation sous pression.

Un avantage d'utiliser des concentrés protéiques comme substrats de fermentation est d'éviter les problèmes précédemment exposées, inhérents à l'emploi de produits tels que du lait entier ou écrémé, de la caséine, ... lorsqu'on veut conduire un procédé de fermentation.

Un autre avantage également lié à l'emploi de concentrés protéiques par rapport à l'emploi de laits emprésurés est de travailler sur un milieu ayant une composition voisine de celle du fromage et présentant de plus de nombreux avantages (milieu fluide, consistance homogène, donc milieu stérilisable et mieux adapté à la conduite rationnelle de la fermentation). De ce fait, on obtient une régularité d'obtention des arômes, et en outre la teneur en lactose du composé protéique permet d'obtenir certaines fermentations désirées, telles que la fermentation lactique.

Les concentrés protéiques utilisés dans la présente invention proviennent du lait, du lactosérum ou de protéines végétales. A titre d'illustration de protéines végétales, on peut citer le soja et des oléagineuses, telles que le tournesol et l'arachide. Ces concentrés sont obtenus par ultrafiltration (décrit dans les demandes de brevets français n° 2.052.121, n° 2.166.315, n° 2.166.426, n° 2.292.435, n° 2.218.821 et n° 2.289.115), dialyse ou chromatographie préparative pour réaliser une concentration des protéines allant de 40 à 90%, de préférence 70 %, comme on la rencontre dans les concentrés protéiques obtenus par le procédé de la présente invention.

Après concentration des protéines, on règle la teneur en extrait sec des concentrés entre environ 5 et 50 %, puis on procède à une standardisation en matière grasse afin que la teneur en matière grasse (par rapport à l'extrait sec) soit compris entre 5 et 50 %, de préférence de 20 à 30 %. Pour obtenir cette standardisation, on ajoute une matière grasse lactique (crème, beurre, huile de beurre, etc...) et/ou végétale (coprah, palmiste, palme, etc...).

Le concentré protéique est alors soumis à une homogénéisation sous pression qui est conduite de préférence en deux stades: dans le premier stade, on applique une pression de 100 à 200 bars et, dans le second stade, une pression de 25 à 75 bars. Après homogénéisation, le concentré protéique est stérilisé en le soumettant à un traitement thermique qui détruit la flore microbienne. De préférence, ce traitement est réalisé par choc thermique (dit "flashing") entre 100 et 150°C, pendant un temps de 5 à 60 secondes, de préférence entre 30 et 60 secondes.

Après ces diverses opérations, le concentré protéique est soumis à des actions enzymatiques et/ou à un ensemencement par des ferments générateurs d'arôme, produisant une fermentation du type lactique, propionique, etc..., ces fermentations ou ces actions enzymatiques étant choisies pour fournir un concentré protéique ayant un arôme proche de celui du fromage désiré. A titre d'enzymes utilisables dans le présent procédé, on citera la lipase, ainsi que d'autres enzymes qui ont une action au cours de la maturation du fromage, notamment la lactase et les protèases.

Pour la fermentation propionique, on peut ajouter éventuellement des vitamines ou des oligoéléments, en vue d'assurer un meilleur dèveloppement de cette fermentation. A titre d'exemples de vitamines, on citera celles du groupe B, notamment la vitamine $B_3$ (acide pantothénique). Parmi les oligoéléments, il y a surtout le cobalt. On peut aussi ajouter des agents réducteurs tels que le glutathion et/ou le chlorhydrate de cystéine.

Pour obtenir un arôme plus typé, on peut ajouter au concentré, après standardisation en matière grasse, homogénéisation et stérilisation, des microorganismes (par exemple à action protéolytique et/ou lipolytique) agissant conjointement à la fermentation décrite ci-dessus et favorisant le développement d'une certaine amertume qu'on recherche parfois dans certains fromages.

Selon la présente invention, on peut également ensemencer le concentré protéique avec le fromage dont on cherche à reproduire l'arôme, en profitant ainsi des microorganismes présents dans le fromage pour developper l'arôme de ce fromage.

Le temps nécessaire pour développer l'arôme est d'environ 6 à 24 jours, ce temps variant selon le type et l'intensité de l'arôme souhaité.

Dans un exemple de réalisation préféré de la présente invention, pour obtenir un arôme de fromage à pâte cuite, le concentré protéique obtenu par un des moyens cités ci-dessus est standardisé en matière grasse, homogénéisé, stérilisé et ensuite soumis à une fermentation lactique vers 40°C, par ensemencement de germes lactiques (Streptocoques thermophilus et Lactobacillus helveticus). Ceci est suivi d'une fermentation propionique à une température comprise entre 20 et 40°C par ensemencement de germes propioniques du commerce, jusqu'à obtention de l'arôme désiré. Le temps de fermentation s'étend de 6 à 24 jours en fonction de l'intensité de l'arôme désiré.

Dans un autre exemple de réalisation préféré de la présente invention, pour préparer un fromage du type à pâte persillée, le concentré protéique, standardisé en matières grasses, homogénéisé et stérilisé est d'abord soumis à une action enzymatique (lipase), puis éventuellement à une pasteurisation à environ 80°C pendant quelques minutes (afin d'inhiber l'action de la lipase), et ensuite ensemencé avec une souche spécifique du développement de son arôme (Penicillum Roqueforti, par exemple). La fermentation est conduite seule ou conjointment avec l'action lipasique si celle-ci n'a pas été désactivée, pendant un temps suffisament long (de 6 à 24 jours) jusqu'à l'obtention de l'arôme voulu.

Les produits obtenus selon la présente invention peuvent être utilisés en l'état, ou soumis à un certain nombre de traitements. A titre d'exemples, les produits finis ayant l'arôme désiré peuvent être concentrés, lyophilisés, séchés (par exemple par atomisation) ou encapsulés.

Les produits obtenus peuvent être, en outre, mélangés avec du lait entier ou écrémé ou avec le concentré protéique de départ, et soumis à l'action de la présure (ou de ses succédanés) pour donner des fromages aromatiques après un court affinage.

Tous les produits obtenus selon la présente invention peuvent être utilisés, à l'état séché ou non, dans la fabrication de fromages fondus en remplacement partiel ou total des fromages à pâte pressée cuite, afin de renforcer la puissance aromatique de ces fromages, ou pour aromatiser des préparations culinaires et/ou des produits alimentaires préparés (plats cuisinés, snacks, gratins, pâtes à tartiner, etc...).

La présente invention sera maintenant décrite à l'aide des exemples de réalisation suivants, qui ne sont donnés qu'à titre d'illustration et non de limitation de la présente invention.

Exemple 1

*Fabrication d'un arôme de type fromage à pâte pressée cuite*

Un concentré protéique de lait, obtenu par exemple par ultrafiltration est soit ajusté à une teneur en matière sèche variant de 5 à 25 %, soit (s'il est en poudre) remis en suspension dans les conditions désirées.

De la matière grasse lui est ajoutée, sous forme de crème ou de beurre ou de matière grasse lactique anhydre et, éventuellement, de la matière grasse végétale (coprah, palmiste, palme, ...), de manière à avoir un mélange final ayant de 10 à 50 % d'extrait sec et un rapport (Gras/Sec) variant de 10 à 50 %.

Du chlorure de sodium est ajouté, à une teneur telle qu'il soit acceptable sur le plan gustatif et sur le plan des fermentations soit entre 0,5 et 2 %.

Le mélange est soumis à une homogénéisation classique à deux effets (150 bars/50 bars), puis stérilisé par choc termique à une température de 100 à 150°C, pendant un temps compris entre 5 et 60 secondes.

Il est recueilli dans un récipient stérile dans lequel sont conduites les fermentations suivantes dans l'ordre indiqué:

— fermentation lactique avec des bactéries lactiques telles que Streptococcus thermophilus et Lactobacillus helveticus, adaptées au type d'arôme recherché et permettant l'obtention d'un pH et d'une acidité désirées, comme par exemple:

$4,6 < \text{ph} < 5,8$ et $80 < $ acidité en degrés Dornic $< 160$

— après arrêt de la fermentation précédente par chauffage, une fermentation propionique est réalisée avec des bactéries propioniques du commerce, en anaérobiose, sous gaz inerte (azote ou gaz carbonique) à une température comprise entre 20 et 40°C pendant 6 à 18 jours, c'est-à-dire jusqu'à l'obtention d'un arôme d'intensité voulue. Celle-ci peut être déterminée soit par une méthode physicochimique, comme la chromatographie en phase gazeuse avec laquelle on suit l'évolution d'un composant essentiel de l'arôme recherché comme, par exemple, l'acide propionique, soit par l'analyse sensorielle.

On peut éventuellement ajouter au concentré des vitamines et des oligoéléments, afin de favoriser le développement de cette fermentation propionique.

Sa composition peut être la suivante:

| | |
|---|---|
| % d'extrait sec | 19 |
| % de matière grasse | 5,5 |
| % du rapport de (Gras/Sec) | 29 |
| % de matière protéique totale | |
| (Kjeldahl, N x 6,39) | 8 |
| pH | 5,2 |
| mg d'acide acétique/100 g | 60 |
| mg d'acide propionique/100 g | 1500 |
| mg d'acide butyrique/100 g | 10 |

Le produit obtenu peut être utilisé dans la fabrication de fromage fondu, en remplacement partiel ou total des fromages traditionnels à pâte pressée cuite. La comparaison des fromages fondus ainsi obtenus par rapport à ceux préparés de manière classique montre qu'ils sont au moins autant appréciés que ces derniers. D'autre part, l'emploi de concentrés aromatiques permet d'améliorer la régularité des fabrications.

Le produit peut être mélangé à du lait ou à un concentré protéique de lait, puis soumis à une action de la présure ou de ses succédanés pour fournir un caillé aromatique.

Le produit peut être utilisé également avec beaucoup de succès dans toutes les préparations culinaires et les produits alimentaires dans lesquels un arôme fromager est recherché, comme, par exemple, les gratins, les snacks, les pâtes à tartiner, etc...

Exemple 2
*Fabrication d'un arôme type bleu*
Comme décrit dans l'exemple précédent, il est possible de faire subir au concentré protéique réengraissé stérile:

— une action enzymatique avec une lipase, destinée à libérer des acides gras à courte chaîne;

— une fermentation en aérobiose avec l'emploi d'un Penicillum conduisant à l'obtention d'un arôme bleu intense.

Comme décrit dans l'exemple précédent, l'arôme est récupéré et peut être employé dans diverses préparations alimentaires.

La présente invention n'est pas limitée aux exemples de réalisation qui viennent d'être décrits, elle est au contraire susceptible de variantes et de modifications qui apparaîtront à l'homme de l'art.

**Revendications**

1. Procédé de préparation de concentrés protéiques réengraissés, à arôme fromager par réglage de la teneur en extrait sec, standardisation en matière grasse, homogénéisation sous pression, stérilisation et fermentation aromatisante, par action enzymatique ou ensemencement par des ferments générateurs d'arôme fromager, caractérisé en ce que le réglage de la teneur en extrait sec des concentrés est réalisé par ultrafiltration, dialyse ou chromatographie préparative, et en ce qu'avant la stérilisation, les concentrés protéiques sont soumis à une homogénéisation sous pression.

2. Procédé selon la revendication 1, caractérisé en ce que le concentré protéique provient de lait, de lactosérum ou de protéines végétales.

3. Procédé selon la revendication 2, caractérisé en ce que les protéines végétales sont tirées du soja et d'oléagineuses.

4. Procédé selon l'une quelconque des revendications 1 à 3, caractéisé en ce que la teneur en extrait sec est réglée entre 5 et 50 %.

5. Procédé selon l'une quelconque des revendications 1 à 4, caractérisé en ce que le concentré est standardisé en matière grasse afin d'obtenir une teneur en matière grasse (par rapport à l'extrait sec) comprise entre 5 et 50 %.

6. Procédé selon la revendication 5, caractérisé en ce que la matière grasse est constituée par au moins une matière choisie dans le groupe se composant de matières grasses lactiques et de matières grasses végétales.

7. Procédé selon l'une quelconque des revendications 1 à 6, caractérisé en ce que l'homogénéisation est réalisée en deux stades, une pression de 100 à 200 bars étant employée dans le premier stade et de 25 à 75 bars dans le second stade.

8. Procédé selon l'une quelconque des revendications 1 à 7, caractérisé en ce qu'après homogénéisation, le concentré est stérilisé en le soumettant à un traitement thermique détruisant la flore microbienne.

9. Procédé selon la revendication 8, caractérisé en ce que le traitement thermique est effectué par choc thermique entre 100 et 150°C, pendant un temps de 5 à 60 secondes.

10. Procédé selon l'une quelconque des revendications 1 à 9, caractérisé en ce que l'ensemencement est réalisé à l'aide de microorganismes et d'enzymes.

11. Procédé selon la revendication 10, caractérisé en ce que les microorganismes sont des bactéries et des moisissures.

12. Procédé selon la revendication 10, caractérisé en ce qu'on ensemence des germes lactiques (par exemple Streptococcus Thermophilus et Lactobacillus Helveticus) et des germes propioniques pour obtenir un arôme de fromage à pâte pressée cuite.

13. Procédé selon la revendication 10, caractérisé en ce qu'on ensemence avec une lipase, qui peut être éventuellement soumise à un traitement thermique qui la désactive, puis avec une souche de moisissures, par exemple Penicillium Roqueforti, pour obtenir un arôme de fromage à pâte persillée.

14. Procédé selon la revendication 11, caractérisé en ce que, pendant la fermentation, on ajoute des bactéries à action protéolytique (par exemple microcoques) afin de renforcer l'arôme pour y conférer, par exemple, une certaine amertume.

15. Procédé selon l'une quelconque des revendications 1 à 9, caractérisé en ce qu'on ensemence avec des fromages dont on cherche à reproduire l'arôme.

16. Procédé selon l'une quelconque des revendications 1 à 15, caractérisé en ce que le temps nécessaire à la formation de l'arôme est compris entre 6 et 24 jours.

17. Procédé selon l'une quelconque des revendcations 1 à 16, caractérisé en ce que les concentrés protéiques réengraissés, à arôme fromager, ainsi obtenus, sont soumis à au moins un des traitements choisis dans le groupe se composant de concentration, de lyophilisation, de séchage et d'encapsulation.

18. Utilisation des produits obtenus par le procédé selon l'une quelconque des revendications 1 à 17, à l'état séché ou non séché, pour la fabrication de fromages fondus et l'aromatisation de préparations culinaires ou de produits alimentaires préparés.

19. Utilisation des produits obtenus par le procédé selon l'une quelconque des revendications 1 à 17, pour le mélange avec du lait entier ou ècrémé ou avec le concentré protéique de départ, et pour l'action de la présure ou de ses succédanés afin de donner des fromages aromatiques après un court affinage.

## Claims

1. Method for preparing refattened protein concentrates with cheese aroma by regulation of the dry extract content, standardization of fatty material, homogenization under pressure, sterilization and aromatizing fermentation, through enzymatic action or seeding by cheese aroma generating ferments, characterized in that the regulation of the dry extract content of the concentrates is realized by ultrafiltration, dialysis or preparative chromatography, and in that, before sterilization, the protein concentrates are submitted to a homogenization under pressure.

2. Method according to claim 1, characterized in that the protein concentrate comes from milk, lactoserum or vegetable proteins.

3. .Method according to claim 2, characterized in that the vegetable proteins are drawn from soybean and oleaginous plants.

4. Method according to any one of claims 1 to 3, characterized in that the dry extract content is regulated between 5 and 50%.

5. Method according to any one of claims 1 to 4, characterized in that the concentrate is standardized in fatty material in order to obtain a fatty material content (with respect to the dry extract) comprised between 5 and 50%.

6. Method according to claim 5, characterized in that the fatty material is composed of at least one material selected from the group composed of milk fatty materials and vegetable fatty materials.

7. Method according to any one of claims 1 to 6, characterized in that homogenization is carried out in two steps, a pressure of 100 to 200 bars being employed in the first step and 25 to 75 bars in the second step.

8. Method according to any one of claims 1 to 7, characterized in that, after homogenization, the concentrate is sterilized by submitting it to a thermal treatment destroying microbial flora.

9. Method according to claim 8, characterized in that heat treatment is carried out by heat impact between 100 and 150°C, for a time of 5 to 60 seconds.

10. Method according to any one of claims 1 to 9, characterized in that seeding is carried out with the aid of micro-organisms and enzymes.

11. Method according to claim 10, characterized in that micro-organisms are bacteria and molds.

12. Method according to claim 10, characterized in that lactic germs (for example Streptococcus Thermophilus and Lactobacillus Helveticus) and propionic germs are seeded so as to obtain a cooked pressed paste cheese aroma.

13. Method according to claim 10, characterized in that there is seeded with a lipase, which can be possibly submitted to a thermal treatment which inactivates it, thereafter with a mold strain, for example Penicillium Roqueforti, so as to obtain a blue-veined cheese aroma.

14. Method according to claim 11, characterized in that, during fermentation, proteolytic action bacteria (for example micrococci) are added so as to enhance aroma in order to impart thereto, for example, some bitterness.

15. Method according to any one of claims 1 to 9, characterized in that there is seeded with cheeses, the aroma of which is sought to be reproduced.

16. Method according to any one of claims 1 to 15, characterized in that the time necessary for aroma formation is comprised between 6 and 24 days.

17. Method according to any one of claims 1 to 16, characterized in that refattened protein concentrates, with cheese aroma, thus obtained, are submitted to at least one of the treatments selected from the group composed of concentration, lyophilization, drying and encapsulation.

18. Use of products obtained by the process according to any one of claims 1 to 17, in the dried or non dried state, for manufacturing process cheeses and for aromatization of cook preparations or prepared food products.

19. Use of products obtained by the method according to any one of claims 1 to 17, for admixture with whole milk or skim milk or the starting protein concentrate, and for the action of rennet or replacements thereof, so as to give aromatic cheeses after a short refining.

## Patentansprüche

1. Verfahren zur Herstellung von protein- und fetthaltigen Konzentraten mit Käsearoma durch Einstellung des Trockenextraktgehalts, Standartisierung des Fettgehalts, Homogenisierung unter Druck, Sterilisation und aromatisierende Fermentation durch die enzymatische Wirkung oder das Impfen mit ein Käsearoma erzeugenden Fermenten, dadurch gekennzeichnet, daß die Eistellung des Tockenextraktgehalts der Konze ate durch Ultrafiltration, Dialyse oder präparative Chromatographie erfolgt, und daß vor der Sterilisation die proteinhaltigen Konzentrate einer Homogenisierung unter Druck unterworfen werden.

2. Verfahren nach Anspruch 1, dadurch gekennzeichnet, daß das proteinhaltige Konzentrat aus Milch, Laktoserum oder Pflanzenproteinen gewonnen wird.

3. Verfahren nach Anspruch 2, dadurch gekennzeichnet, daß die Pflanzenproteine aus Soja und Oleagenosen gewonnen werden.

4. Verfahren nach einem der Ansprüche 1 bis 3, dadurch gekennzeichnet, daß der Trockenextratgehalt auf 5 bis 50% eingestellt wird.

5. Verfahren nach einem der Ansprüche 1 bis 4, dadurch gekennzeichnet, daß das Konzentrat bezüglich des Fettgehaltes derart standardisiert wird, daß ein Fettgehalt (bezogen auf den Trockenextrakt) zwischen 5 und 50% erhalten wird.

6. Verfahren nach Anspruch 5, dadurch gekennzeichnet, daß das Fettmaterial aus einem Material besteht, das aus einer Gruppe ausgewählt wird, die aus Milchfettmaterialien sowie Pflanzenfettmaterialien besteht.

7. Verfahren nach einem der Ansprüche 1 bis 6, dadurch gekennzeichnet, daß die Homogenisierung in zwei Phasen durchgeführt wird, wobei bei der ersten Phase ein Druck von 100 bis 200 bar angewendet wird und in der zweiten Phase von 25 bis 75 bar.

8. Verfahren nach einem der Ansprüche 1 bis 7, dadurch gekennzeichnet, daß nach der Homogenisierung das Konzentrat sterilisiert wird, indem es einer Wärmebehandlung unterworfen wird, die die mikrobiologische Flora zerstört.

9. Verfahren nach Anspruch 8, dadurch gekennzeichnet, daß die Wärmbehendlung durch Schockerhitzung zwischen 100 und 150°C während einer Zeit von 5 bis 60 sekunden durchgeführt wird.

10. Verfahren nach einem der Ansprüche 1 bis 9, dadurch gekennzeichnet, daß das Impfen mit Hilfe von Mikroorganismen und Enzymen erfolgt.

11. Verfahren nach Anspruch 10, dadurch gekennzeichnet, daß die Mikroorganismen Bakterien oder Schimmelpilze sind.

12. Verfahren nach Anspruch 10, dadurch gekennzeichnet, daß mit Milchkeimen (beispielsweise Streptococcus Thermophilus und Lactobacillus Helveticus) sowie mit Propion-Keimen geimpft wird, um ein Hüttenkäsearoma zu erhalten.

13. Verfahren nach Anspruch 10, dadurch gekennzeichnet, daß mit einer Lipase geimpft wird, die gegebenenfalls einer Wärmebehandlung unterworfen wird, die sie desaktiviert, und dann mit einem Schimmelpilzstamm, beispielsweise Penicillium Roquefort: um ein Gorgonzolakäsearoma zu erhalten.

14. Verfahren nach Anspruch 11, dadurch gekennzeichnet, daß während der Fermentation zur Verstärkung des Aromas proteolytisch wirksame Bakterien (beispielsweise Mikrokokken) zugegeben werden, um beispielsweise eine gewisse Bitterkeit hervorzubringen.

15. Verfahren nach einem der Ansprüche 1 bis 9, dadurch gekennzeichnet, daß mit solchen Käsen geimpft wird, deren Aroma man zu reproduzieren versucht.

16. Verfahren nach einem der Ansprüche 1 bis 15, dadurch gekennzeichnet, daß die für die Aromabildung erforderliche Zeit 6 bis 24 Tage beträgt.

17. Verfahren nach einem der Ansprüche 1 bis 16, dadurch gekennzeichnet, daß die so hergestellten proteinund fetthaltigen Konzentrate mit Käsearoma wenigstens einer Behandlung unterworfen wird, die aus einer Gruppe ausgewählt wird, die aus der Konzentrierung, Lyophilisierung, Trocknung und Verpackung besteht.

18. Verwendung der nach einem der Ansprüche 1 bis 17 hergestellten Produkte im trockenen oder nicht trockenen Zustand zur Herstellung von Schmelzkäse sowie zur Aromatisierung von Speisen oder Fertiggerichten.

19. Verwendung der nach einem der Ansprüche 1 bis 17 hergestellten Produkte zur Vermischung mit Vollmilch oder entrahmter Milch oder mit dem proteinhaltigen Ausgangskonzentrat sowie bei der Druckeinwirkung oder den anschließenden Schritten, um aromatische Käse nach kurzer Reifung zu erhalten.